# EUROPÄISCHE PATENTSCHRIFT

(11) **EP 3 525 962 B1**
(45) Veröffentlichungstag und Bekanntmachung des Hinweises auf die Patenterteilung: **30.12.2020**
(21) Anmeldenummer: 17807735.0
(22) Anmeldetag: 09.11.2017
(51) Int. Cl.: B22F 3/105, B22F 3/11, B22F 5/00, B22F 5/04, B22F 7/00, B23K 26/342, F01D 11/12, B23K 101/00

(54) **VERFAHREN ZUR HERSTELLUNG EINES GASTURBINENBAUTEILS**
METHOD FOR PRODUCING A GAS TURBINE COMPONENT
PROCÉDÉ DE FABRICATION D'UN COMPOSANT DE TURBINE À GAZ

(30) Priorität: 08.12.2016 EP 16202832
(43) Veröffentlichungstag der Anmeldung: 21.08.2019
(73) Patentinhaber: Siemens Aktiengesellschaft, 80333 München (DE)
(72) Erfinder: BURBAUM, Bernd, 14612 Falkensee (DE); JOKISCH, Torsten, 15366 Neuenhagen bei Berlin (DE)
(86) Internationale Anmeldenummer: PCT/EP2017/078720
(87) Internationale Veröffentlichungsnummer: WO 2018/103995

(56) Entgegenhaltungen:
- EP-A1- 2 815 823
- DE-A1-102014 213 914
- US-A1- 2016 214 176

## Beschreibung

Die vorliegende Erfindung betrifft ein Verfahren zur Herstellung eines Gasturbinenbauteils, das im bestimmungsgemäß montierten Zustand während des Gasturbinenbetriebs in Reibkontakt mit zumindest einem Reibpartner kommt.

Im Stand der Technik ist es bereits bekannt, dass der Wirkungsgrad von Gasturbinen durch Reduzierung von Leckageverlusten gesteigert werden kann. Entsprechend ist man bestrebt, Spalte zwischen sich relativ zueinander bewegenden Gasturbinenbauteilen zu minimieren. Dies gilt insbesondere für die Spalte zwischen den statorseitigen Führungsringsegmenten und den rotorseitigen Laufschaufeln und die Spalte zwischen den statorseitigen Leitschaufeln und dem Rotor. Eine Möglichkeit zur Minimierung solcher Spalte besteht darin, insbesondere die Flächen der statorseitigen Gasturbinenbauteile, die im bestimmungsgemäß montierten Zustand während des Gasturbinenbetriebs in Reibkontakt mit zumindest einem Reibpartner kommen, mit einer abreibbaren Beschichtung zu versehen, die derart beschaffen ist, dass sie von den rotierenden Reibpartnern im Falle eines Kontaktes leicht abgetragen werden können. Solche abreibbaren Beschichtungen ermöglichen das schnelle Erreichen eines Gleichgewichtszustands zwischen den sich relativ zueinander bewegenden Komponenten ohne übermäßigen Verschleiß und unter Erzielung eines sehr geringen Spaltmaßes. Ein Verfahren nach dem Stand der Technik ist z.B. aus der EP 2 815 823 A1 bekannt.

Ausgehend von diesem Stand der Technik ist es eine Aufgabe der vorliegenden Erfindung, ein Verfahren der eingangs genannten Art zu schaffen, mit dem ein Gasturbinenbauteil, das im bestimmungsgemäß montierten Zustand während des Gasturbinenbetriebs in Reibkontakt mit zumindest einem Reibpartner kommt, in einfacher Weise mit einer abreibbaren Beschichtung mit gezielt eingestellten Eigenschaften versehen werden kann.

Zur Lösung dieser Aufgabe schafft die vorliegende Erfindung ein Verfahren der eingangs genannten Art, das die Schritte aufweist: Bereitstellen eines Basiskörpers, der aus einer Superlegierung hergestellt ist, insbesondere aus einer Nickelbasislegierung; Auftragen einer ersten metallischen Beschichtung auf eine Fläche des Basiskörpers, die im bestimmungsgemäß montierten Zustand dem zumindest einen Reibpartner zugewandt ist, wobei zum Auftragen ein additives Fertigungsverfahren unter Verwendung eines ersten metallischen Pulvers eingesetzt wird; und Auftragen einer zweiten metallischen Beschichtung auf die erste metallische Beschichtung, wobei zum Auftragen ein additives Fertigungsverfahren unter Verwendung eines zweiten metallischen Pulvers sowie eines pulverförmigen Porenbildners eingesetzt und die Porosität der zweiten metallische Beschichtung durch die Zugabe des Porenbildners derart eingestellt wird, dass diese größer ist als die Porosität der ersten metallischen Beschichtung, und wobei die Volumenströme des zugeführten metallischen Pulvers und des zugeführten pulverförmigen Porenbildners separat eingestellt oder geregelt werden.

Die Verwendung von Super- bzw. Nickelbasislegierungen für Basiskörpere hat sich in der Vergangenheit aufgrund der guten Korrosions- und Hochtemperaturbeständigkeit dieser Materialien bewährt. Bei dem erfindungsgemäßen Verfahren werden auf ein solches Basiskörper aufeinander folgend eine erste metallische Beschichtung und eine zweite metallische Beschichtung unter jeweiligem Einsatz eines additiven Fertigungsverfahrens und entsprechender metallischer Pulver aufgetragen, wobei die Porosität der zweiten metallischen Beschichtung unter Einsatz eines pulverförmigen Porenbildners größer als die Porosität der ersten metallischen Beschichtung eingestellt wird. Die geringere Porosität der ersten metallischen Beschichtung ist dahingehend von Vorteil, dass die erste metallische Beschichtung sehr gute Hafteigenschaften in Bezug auf das Basiskörper aufweist. Mit der höheren Porosität der zweiten metallischen Beschichtung geht eine gute Abreibbarkeit der zweiten metallischen Beschichtung einher, was zur Verminderung von Leckageverlusten sehr wünschenswert ist. Dank der Tatsache, dass Volumenströme des zugeführten metallischen Pulvers und des zugeführten pulverförmigen Porenbildners beim Auftragen der zweiten metallischen Beschichtung bei dem erfindungsgemäßen Verfahren separat eingestellt oder geregelt werden, können die Anteile der beiden Bestandteile stufenlos variiert werden, so dass beliebige lokale Variationen der Porenbildung möglich sind. Entsprechend lassen sich insbesondere die Herstellung der zweiten metallischen Beschichtung und damit die Eigenschaften der zweiten metallischen Beschichtung in einfacher Weise sehr flexibel an die gewünschten Anforderungen an das Gasturbinenbauteil anpassen.

Gemäß einer Ausgestaltung der vorliegenden Erfindung wird die erste metallische Beschichtung ausschließlich unter Verwendung des ersten metallischen Pulvers aufgetragen, so dass diese im Wesentlichen porenfrei ist. Auf diese Weise werden eine optimale Haftwirkung und/oder Korrosionsbeständigkeit erzielt.

Bevorzugt wird die erste metallische Beschichtung in einer Dicke aufgetragen, die 200 um nicht überschreitet. Mit einer derart geringen Dicke der ersten metallischen Beschichtung wurden sehr gute Ergebnisse erzielt.

Vorteilhaft wird der Volumenstrom des pulverförmigen Porenbildners beim Auftragen der zweiten metallischen Beschichtung derart eingestellt oder geregelt, dass die Porosität in Auswärtsrichtung zunimmt. Auf diese Weise wird zwischen der ersten metallischen Beschichtung und der zweiten metallischen Beschichtung ein sehr guter Übergang erzielt.

Gemäß einer Ausgestaltung der vorliegenden Erfindung werden beim Auftragen der zweiten metallischen Beschichtung an derjenigen Außenfläche, die im bestimmungsgemäß montierten Zustand dem zumindest einen Reibpartner zugewandt ist, vorstehende Strukturen ausgebildet, insbesondere Stege, die sich bezogen auf den Montagezustand bevorzugt in Umfangsrichtung, besser noch ausschließlich in Umfangsrichtung erstrecken. Durch eine solche strukturierte Außenfläche der zweiten metallischen Beschichtung kann die Abdichtung zwischen dem Gasturbinenbauteil und seinem zumindest einen Reibpartner optimiert werden, wodurch Leckageverluste während des Gasturbinenbetriebs verringert werden.

Bevorzugt sind das erste metallische Pulver und das zweite metallische Pulver identisch. Entsprechend muss nur ein einziges metallisches Pulver zur Durchführung des Verfahrens bereitgestellt werden, wodurch die Fertigung vereinfacht und preiswerter gestaltet wird.

Insbesondere handelt es sich bei dem ersten metallischen Pulver und bei dem zweiten metallischen Pulver um ein MCrAlY-Pulver, wobei M für das Grundmetall steht, bei dem es sich insbesondere um Nickel und/oder Kobalt handelt. Das Grundmetall bildet die Grundlage der Haftschicht und hat insbesondere die Aufgabe, die nötige Zähigkeit bereitzustellen. Aluminium und Chrom verleihen der Beschichtung den erforderlichen Oxidationsschutz. Yttrium unterstützt in erster Linie die Bildung stabiler Oxide.

Gemäß einer Ausgestaltung der vorliegenden Erfindung werden die erste metallische Beschichtung und die zweite metallische Beschichtung mittels Laserstrahl-Auftragschweißen aufgetragen. Das Laserstrahl-Auftragschweißen zeichnet sich insbesondere durch hohe erzielbare Genauigkeiten und durch eine geringe Wärmeeinbringung in das Substrat aus.

Als pulverförmiger Porenbildner wird vorteilhaft Titandihydrid-Pulver verwendet, mit dem sehr gute Ergebnisse erzielt wurden, insbesondere wenn als metallisches Pulver für die zweite metallische Beschichtung MCrAlY verwendet wird. Der Porenbildner verdampft bei Schmelztemperatur des metallischen Pulvers, wodurch dann die Poren im Schmelzbad gebildet werden.

Gemäß einer Ausgestaltung der vorliegenden Erfindung handelt es sich bei dem Gasturbinenbauteil um ein Führungsringsegment und bei dem zumindest einen Reibpartner um eine Laufschaufel oder umgekehrt. Insbesondere bei der Herstellung von Führungsringsegmenten unter Verwendung des erfindungsgemäßen Verfahrens wurden sehr gute Ergebnisse erzielt.

Weitere Merkmale und Vorteile der vorliegenden Erfindung werden anhand der nachfolgenden Beschreibung eines Verfahrens gemäß einer Ausführungsform der vorliegenden Erfindung unter Bezugnahme auf die Zeichnung deutlich. Darin ist
- Figur 1: eine perspektivische Ansicht eines Gasturbinenbauteils;
- Figur 2: eine schematische Ansicht, die beispielhaft einen Bereich des in Figur 1 dargestellten Gasturbinenbauteils während seiner Herstellung unter Einsatz eines Verfahrens gemäß einer Ausführungsform der vorliegenden Erfindung zeigt;
- Figur 3: eine vergrößerte Ansicht des in Figur 2 mit dem Bezugszeichen III bezeichneten Ausschnitts und
- Figur 4: eine Schnittansicht eines Bereiches einer Gasturbine.

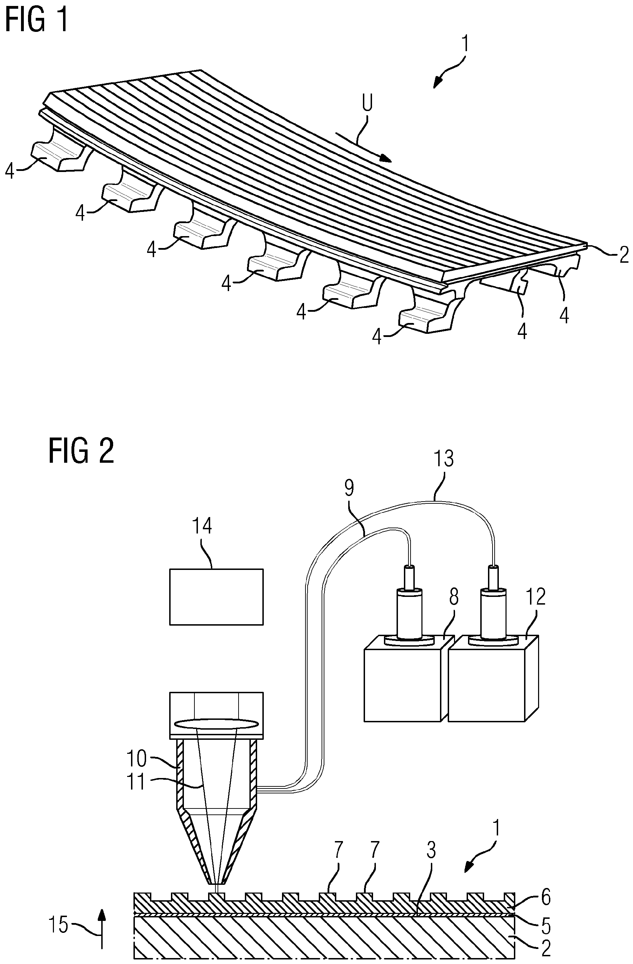

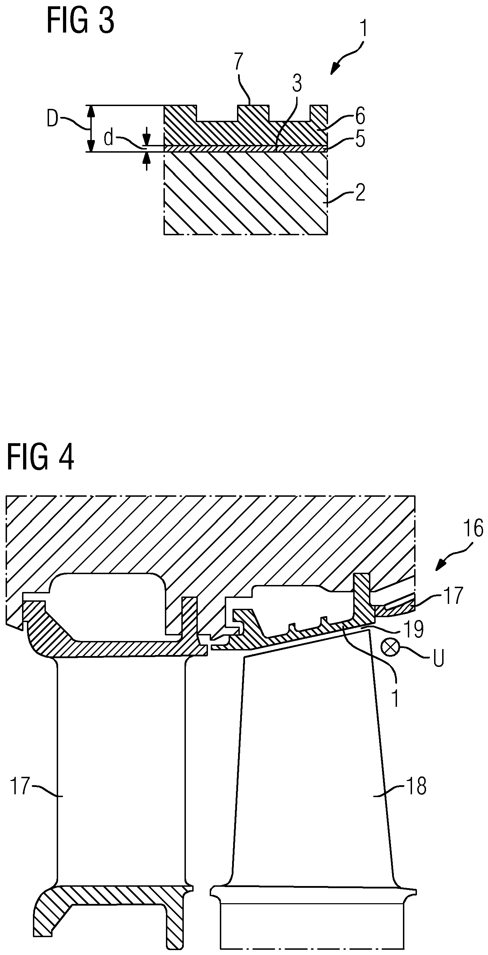

Bei dem in den Figuren 1 bis 3 dargestellten Gasturbinenbauteil 1 handelt es sich um ein so genanntes Führungsringsegment, dessen Funktion nachfolgend unter Bezugnahme auf Figur 4 noch näher erläutert wird. Das Gasturbinenbauteil 1 umfasst vorliegend einen Basiskörper 2, der aus einer Superlegierung hergestellt ist, wie beispielsweise aus einer Nickelbasislegierung. Der Basiskörper 2 definiert an seiner Vorderseite eine im Wesentlichen rechteckig ausgebildete und in einer Umfangsrichtung U mit einer konstanten Krümmung versehene Fläche 3. An der gegenüberliegenden Rückseite definiert der Basiskörper 2 mehrere Montagevorsprünge 4 mit jeweils etwa L-förmigem Querschnitt, die vorliegend in Umfangsrichtung U drei Reihen definieren, wobei die Montagevorsprünge 4 jeder Reihe im Wesentlichen identisch und miteinander fluchtend ausgebildet sind. Zumindest auf der an der Vorderseite des Basiskörpers 2 definierten Fläche 3 ist eine erste metallische Beschichtung 5 in einer Dicke d von bevorzugt nicht mehr als 200 µm vorgesehen, die vorliegend aus MCrAlY hergestellt ist, wobei M für das Grundmetall steht, bei dem es sich um Nickel handelt. Alternativ wäre auch Kobalt als Grundmetall denkbar. Auf der ersten metallischen Beschichtung 5 ist eine zweite metallische Beschichtung 6 mit einer Dicke D angeordnet, die ein Vielfaches der Dicke d der ersten metallischen Beschichtung 5 beträgt 0,5-1 mm. Die zweite metallische Beschichtung 6 ist vorliegend ebenfalls aus MCrAlY mit Nickel oder alternativ Kobalt als Grundmetall hergestellt. Das Gefüge der zweiten metallischen Beschichtung 6 unterscheidet sich von dem der ersten metallischen Beschichtung 5 allerdings dahingehend, dass die Porosität größer ist als diejenige des Gefüges der ersten metallischen Beschichtung 5. An der Außenseite der zweiten metallischen Beschichtung 6 sind vorstehende Strukturen 7 ausgebildet, vorliegend benachbart angeordnete Stege, die sich parallel zueinander in Umfangsrichtung U erstrecken.

Die Figuren 2 und 3 zeigen das Gasturbinenbauteil 1 während seiner Herstellung. In einem ersten Schritt wird der Basiskörper 2 des Gasturbinenbauteils 1 bereitgestellt, beispielsweise als Gusskörper, um nur ein Beispiel zu nennen. In einem weiteren Schritt wird auf die Fläche 3 des Basiskörpers 2 die erste metallische Beschichtung 5 aufgetragen. Hierzu wird ein additives Fertigungsverfahren unter Verwendung eines MCrAlY-Pulvers verwendet, das in einem ersten Vorratsbehälter 8 gelagert ist. Bei dem additiven Fertigungsverfahren handelt es sich vorliegend um Laserstrahl-Auftragsschweißen. Entsprechend wird das MCrAlY-Pulver über einen ersten Pulverförderer 9 einer Schweißdüse 10 zugeführt, in der es von einem Laserstrahl 11 aufgeschmolzen wird, wobei der Volumenstrom des zugeführten Pulvers über eine Steuerung 14 eingestellt oder geregelt wird. Der flächige Auftrag der ersten metallischen Beschichtung 5 auf der Fläche 3 des Basiskörpers 2 erfolgt in bekannter Weise, indem die Schweißdüse 10 in entsprechenden Bahnen über die Fläche 3 geführt wird.

In einem weiteren Schritt wird auf die erste metallische Beschichtung 5 ebenfalls mittels Laserstrahl-Auftragsschweißen die zweite metallische Beschichtung 6 aufgetragen. Zeitgleich mit dem MCrAlY-Pulver wird der Schweißdüse 10 bei der Generierung der zweiten metallischen Beschichtung 6 ein in einem zweiten Vorratsbehälter 12 gelagerter pulverförmiger Porenbildner über einen zweiten Pulverförderer 13 zugeführt, der zusammen mit dem Metallpulver aufgeschmolzen und aufgetragen wird. Die Zugabe des Porenbildners, bei dem es sich vorliegend um Titandihydrid-Pulver handelt, führt dazu, dass die entstehende zweite metallische Beschichtung 6 eine größere Porosität als die erste metallische Beschichtung 5 aufweist, die aufgrund der alleinigen Verwandung des MCrAlY-Pulvers ein m Wesentlichen porenfreies Gefüge hat. Die Volumenströme des zugeführten MCrAlY-Pulvers und des zugeführten pulverförmigen Porenbildners werden separat über eine Steuerung 14 eingestellt oder geregelt. Entsprechend lässt sich die Porosität der zweiten metallischen Beschichtung 6 beliebig einstellen und somit an unterschiedlichste Anforderungen anpassen. Die Porosität der zweiten metallischen Beschichtung 6 kann von innen nach außen in Richtung des Pfeils 15 variieren, insbesondere zunehmen, so dass sich äußere Bereiche der zweiten metallischen Beschichtung einfacher abreiben lassen als weiter innen liegende Bereiche. Ebenso kann die zweite metallische Beschichtung 6 aber auch über ihre gesamte Dicke D eine konstante Porosität aufweisen.

Figur 4 zeigt beispielhaft einen Bereich einer Gasturbine 16, in dem Gasturbinenbauteile 1 der gemäß den Figuren 1 bis 3 beschichteten Art, die sich in Bezug auf die Form des Basiskörper 2 in Abhängigkeit von ihrer Position innerhalb der Gasturbine 16 voneinander unterscheiden können, statorseitig zwischen Leitschaufeln 17 benachbarter Leitschaufelstufen unter Bildung eines Führungsringes angeordnet sind. Unmittelbar radial angrenzend an die Gasturbinenbauteile 1 sind die freien Enden rotorseitig montierter Laufschaufeln 18 derart angeordnet, dass zwischen den Gasturbinenbauteilen 1 beziehungsweise Führungsringsegmenten und den jeweiligen Laufschaufeln 18 lediglich kleine Ringspalte 19 verbleiben. Während des Betriebs der Gasturbine 16 reiben die Laufschaufeln 18 aufgrund thermischer Ausdehnung, Fertigungs- und/oder Montageungenauigkeiten oder sonstiger äußerer Einflüsse, wie beispielsweise Fliehkräfte, mit Ihren Spitzen entlang der zweiten metallischen Beschichtungen 6 der Gasturbinenbauteile 1, wodurch die zweiten metallischen Beschichtungen 6 der Gasturbinenbauteile 1 geringfügig abgerieben wird. Dieser Abrieb wird durch die hohe Porosität der zweiten metallischen Beschichtungen 6 begünstigt. Entsprechend wird ein Ringspalt 19 optimaler Größe erzeugt, der nur wenig Leckageverluste nach sich zieht. Die an der Außenfläche der zweiten metallischen Beschichtung 6 vorgesehenen Strukturen 7 in Form der umfänglichen Stege führen zur weiteren Minimierung der Leckageverluste.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen. Insbesondere sei darauf hingewiesen, dass es sich bei dem Gasturbinenbauteil 1 nicht um ein Führungsringsegment handeln muss. Ebenso kann es sich bei dem Gasturbinenbauteil 1 auch um eine Leitschaufel, eine Laufschaufel oder um ein sonstiges Bauteil handeln, das sich während des bestimmungsgemäßen Betriebs der Gasturbine relativ zu zumindest einem Reibpartner bewegt und dessen Außenfläche von diesem zumindest teilweise abgerieben werden soll.

## Patentansprüche

1. Verfahren zur Herstellung eines Gasturbinenbauteils (1), das im bestimmungsgemäß montierten Zustand während des Gasturbinenbetriebs in Reibkontakt mit zumindest einem Reibpartner kommt, wobei das Verfahren die Schritte aufweist:
- Bereitstellen eines Basiskörpers (2), der aus einer Superlegierung hergestellt ist, insbesondere aus einer Nickelbasislegierung;
- Auftragen einer ersten metallischen Beschichtung (5) auf eine Fläche (3) des Basiskörpers (2), die im bestimmungsgemäß montierten Zustand dem zumindest einen Reibpartner zugewandt ist, wobei zum Auftragen ein additives Fertigungsverfahren unter Verwendung eines ersten metallischen Pulvers eingesetzt wird; und
- Auftragen einer zweiten metallischen Beschichtung (6) auf die erste metallische Beschichtung (5), wobei zum Auftragen ein additives Fertigungsverfahren unter Verwendung eines zweiten metallischen Pulvers sowie eines pulverförmigen Porenbildners eingesetzt und die Porosität der zweiten metallische Beschichtung (6) durch die Zugabe des Porenbildners derart eingestellt wird, dass diese größer ist als die Porosität der ersten metallischen Beschichtung (5), und wobei die Volumenströme des zugeführten metallischen Pulvers und des zugeführten pulverförmigen Porenbildners separat eingestellt oder geregelt werden.

2. Verfahren nach Anspruch 1,
**dadurch gekennzeichnet, dass**
die erste metallische Beschichtung (5) ausschließlich unter Verwendung des ersten metallischen Pulvers aufgetragen wird, so dass diese im Wesentlichen porenfrei ist.

3. Verfahren nach einem der vorhergehenden Ansprüche,
dass die erste metallische Beschichtung (5) in einer Dicke (d) aufgetragen wird, die 200 µm nicht überschreitet.

4. Verfahren nach einem der vorhergehenden Ansprüche,
**dadurch gekennzeichnet, dass**
der Volumenstrom des pulverförmigen Porenbildners beim Auftragen der zweiten metallischen Beschichtung (6) derart eingestellt oder geregelt wird, dass die Porosität in Auswärtsrichtung zunimmt.

5. Verfahren nach einem der vorhergehenden Ansprüche,
**dadurch gekennzeichnet, dass**
beim Auftragen der zweiten metallischen Beschichtung (6) an derjenigen Außenfläche, die im bestimmungsgemäß montierten Zustand dem zumindest einen Reibpartner zugewandt ist, vorstehende Strukturen (7) ausgebildet werden, insbesondere Stege, die sich bezogen auf den Montagezustand bevorzugt in Umfangsrichtung (U), besser noch ausschließlich in Umfangsrichtung (U) erstrecken.

6. Verfahren nach einem der vorhergehenden Ansprüche,
**dadurch gekennzeichnet, dass**
das erste metallische Pulver und das zweite metallische Pulver identisch sind.

7. Verfahren nach einem der vorhergehenden Ansprüche,
**dadurch gekennzeichnet, dass**
es sich bei dem ersten metallischen Pulver und bei dem zweiten metallischen Pulver um ein MCrAlY-Pulver handelt.

8. Verfahren nach einem der vorhergehenden Ansprüche,
**dadurch gekennzeichnet, dass**
die erste metallische Beschichtung (5) und die zweite metallische Beschichtung (6) mittels Laserstrahl-Auftragschweißen aufgetragen werden.

9. Verfahren nach einem der vorhergehenden Ansprüche,
**dadurch gekennzeichnet, dass**
als pulverförmiger Porenbildner Titandihydrid-Pulver verwendet wird.

10. Verfahren nach einem der vorhergehenden Ansprüche,
**dadurch gekennzeichnet, dass**
es sich bei dem Gasturbinenbauteil (1) um ein Führungsringsegment und bei dem zumindest einen Reibpartner um eine Laufschaufel (18) handelt oder umgekehrt.

## Claims

1. Method for producing a gas turbine component (1), which in the intended mounted state comes in frictional contact with at least one friction partner during the gas turbine operation, the method comprising the steps:
- providing a base body (2) which is produced from a superalloy, in particular from a nickel-based alloy;
- applying a first metal coating (5) onto a surface (3) of the base body (2), which surface faces toward the at least one friction partner in the intended mounted state, an additive manufacturing method using a first metal powder being employed for the application; and
- applying a second metal coating (6) onto the first metal coating (5), an additive manufacturing method using a second metal powder and a pore-forming agent in powder form being employed for the application, and the porosity of the second metal coating (6) being adjusted by the addition of the pore-forming agent in such a way that it is greater than the porosity of the first metal coating (5), and the volume flow rates of the supplied metal powder and the supplied pore-forming agent in powder form being adjusted or regulated separately.

2. Method according to Claim 1,
**characterized in that**
the first metal coating (5) is applied using only the first metal powder, so that this coating is essentially pore-free.

3. Method according to one of the preceding claims,
**characterized in that** the first metal coating (5) is applied with a thickness (d) which does not exceed 200 µm.

4. Method according to one of the preceding claims,
**characterized in that**
the volume flow rate of the pore-forming agent in powder form is adjusted or regulated during the application of the second metal coating (6) in such a way that the porosity increases in the outward direction.

5. Method according to one of the preceding claims,
**characterized in that**
during the application of the second metal coating (6), protruding structures (7), in particular webs, which preferably extend in the circumferential direction (U) in relation to the mounting state more preferably only in the circumferential direction (U), are formed on that outer surface which faces toward the at least one friction partner in the intended mounted state.

6. Method according to one of the preceding claims,
**characterized in that**
the first metal powder and the second metal powder are identical.

7. Method according to one of the preceding claims,
**characterized in that**
the first metal powder and the second metal powder are an MCrAlY powder.

8. Method according to one of the preceding claims,
**characterized in that**
the first metal coating (5) and the second metal coating (6) are applied by means of laser-beam deposition welding.

9. Method according to one of the preceding claims,
**characterized in that**
titanium dihydride powder is used as a pore-forming agent in powder form.

10. Method according to one of the preceding claims,
**characterized in that**
the gas turbine component (1) is a guide ring segment and the at least one friction partner is a rotor blade (18), or vice versa.

## Revendications

1. Procédé de fabrication d'une pièce (1) de turbine à gaz, qui, à l'état monté conformément aux prescriptions, vient, pendant le fonctionnement de la turbine à gaz, en contact de frottement avec au moins un partenaire de frottement, le procédé ayant les stades :
- on se procure une embase (2), qui est en un superalliage, notamment en un alliage à base de nickel ;
- on dépose un premier revêtement (5) métallique sur une surface (3) de l'embase (2), qui, à l'état monté conformément aux prescriptions, est tournée vers le au moins un partenaire de frottement, dans lequel, pour le dépôt, on utilise un procédé de fabrication additif en utilisant une première poudre métallique ; et
- on dépose un deuxième revêtement (6) métallique sur le premier revêtement (5) métallique, dans lequel, pour le dépôt, on utilise un procédé de fabrication additif en utilisant une deuxième poudre métallique, ainsi qu'un agent porogène pulvérulent, et on règle la porosité du deuxième revêtement (6) métallique par addition de l'agent porogène, de manière à ce qu'elle soit plus grande que la porosité du premier revêtement (5) métallique, et dans lequel on établit ou on régule séparément les flux en volume de la poudre métallique apportée et de l'agent porogène pulvérulent apporté.

2. Procédé suivant la revendication 1,
**caractérisé en ce que**
on dépose la première couche (5) métallique en utilisant exclusivement la première poudre métallique, de manière à ce que celle-ci soit sensiblement exempte de pore.

3. Procédé suivant l'une des revendications précédentes,
**caractérisé en ce que**
on dépose le premier revêtement (5) métallique en une épaisseur (d), qui ne dépasse pas 200 µm.

4. Procédé suivant l'une des revendications précédentes,
**caractérisé en ce que**
on établit ou régule le flux en volume de l'agent porogène pulvérulent lors du dépôt du deuxième revêtement (6) métallique, de manière à ce que la porosité augmente en direction de l'extérieur.

5. Procédé suivant l'une des revendications précédentes,
**caractérisé en ce que**
lors du dépôt du deuxième revêtement (6) métallique sur la surface extérieure, qui, à l'état monté conformément aux prescriptions, est tournée vers le au moins un partenaire de frottement, on constitue des structures (7) en saillie, notamment des nervures, qui, rapporté à l'état de montage, s'étendent de préférence dans la direction (U) du pourtour, mieux encore exclusivement dans la direction (U) du pourtour.

6. Procédé suivant l'une des revendications précédentes,
**caractérisé en ce que**
la première poudre métallique et la deuxième poudre métallique sont pareilles.

7. Procédé suivant l'une des revendications précédentes,
**caractérisé en ce que**
la première poudre métallique et la deuxième poudre métallique sont une poudre de MCrAlY.

8. Procédé suivant l'une des revendications précédentes,
**caractérisé en ce que**
on dépose le premier revêtement (5) métallique et le deuxième revêtement (6) métallique au moyen d'un soudage avec métal d'apport au faisceau laser.

9. Procédé suivant l'une des revendications précédentes,
**caractérisé en ce que**
on utilise comme agent porogène pulvérulent de la poudre d'hydrure de titane.

10. Procédé suivant l'une des revendications précédentes,
**caractérisé en ce que**
la pièce (1) de turbine à gaz est un segment d'anneau de guidage et dans lequel au moins un partenaire de frottement est une aube (18) mobile ou inversement.
